# EUROPEAN PATENT SPECIFICATION

(11) **EP 0 736 073 B1**
(45) Date of publication and mention of the grant of the patent: **11.03.1998**
(21) Application number: 95904797.8
(22) Date of filing: 08.12.1994
(51) Int. Cl.: C09C 1/00, C09D 5/38

(54) **COATING COMPOSITION CONTAINING OPTICALLY-VARIABLE DICHROIC PIGMENT AND INTERFERENCE MICA PIGMENT**
OPTISCH VARIABLES DICHROITISCHES PIGMENT UND INTERFERENZGLIMMER ENTHALTENDE BESCHICHTUNGS-ZUSAMMENSETZUNG
COMPOSITION POUR REVETEMENTS COMPORTANT UN PIGMENT DICHROIQUE OPTIQUEMENT VARIABLE ET UN PIGMENT INTERFERENTIEL DE MICA

(30) Priority: 23.12.1993 US 173523
(43) Date of publication of application: 09.10.1996
(73) Proprietor: BASF CORPORATION, Southfield, Michigan 48086-5009 (US)
(72) Inventor: JOHNSON, Daniel, W., Westland, MI 48185 (US)
(74) Representative: Münch, Volker, Dr.
(86) International application number: US9413890
(87) International publication number: WO9517475

(56) References cited:
- EP-A- 0 389 274
- US-A- 4 434 010

## Description

### Field of the Invention

This invention relates to coating compositions, and in particular to pigmented coating compositions useful for color-plus-clear composite coatings.

### Background of the Invention

Optically-variable thin-film pigment flakes have been described in the art for a variety of applications, such as inks for counterfeit-proof applications such as currency, and generically for coating compositions. They are described, for example, in U.S. Patents 4,434,010, 4,704,356, 4,779,898, 4,838,648, 4,930,866, 5,059,245, 5,135,812, 5,171,363, and 5,214,530. These pigments are prepared by depositing inorganic transparent dielectric layers, semi-transparent metal layers, and metal reflecting layers onto a flexible web, and separating the layers from the web in such a manner as to fragment the deposited thin film layer structure into pigment particles. These particles are in the form of irregularly-shaped flat pigment flakes. These pigments are capable of producing dramatic visual effects, including dichroic effects not observed in other types of pigments.

In many cases, however, the visual effect of the pigment may be too dramatic to be useful in coating compositions for commercial applications. Moreover, due to cost or other considerations, the optimal level of the optically-variable thin-film pigment in a coating composition may not be sufficient to provide adequate hiding. Other pigments may be added to dilute the visual impact of the dichroic effect, however, many of these pigment combinations will not yield coatings with a light, clean color that maintains the dichroic effect and weakens chromaticity.

### Summary of the Invention

According to the present invention, there is provided a coating composition is described comprising a polymer resin binder and optically variable thin film dichroic pigment flakes. The pigment flakes have a multilayer thin film interference structure comprising a metal reflector layer having first and second parallel planar surfaces and, disposed on at least one of said first and second planar surfaces, at least one transparent dielectric layer. The coating composition further comprises an interference mica pigment having an interference color that is the same as one of the dichroic colors of the optically variable thin film pigment.

### Description of the Preferred Embodiments

Optically-variable thin-film pigment flakes are well-known in the art. Their characteristics and their preparation is described in U.S. Patents 4,434,010, 4,704,356, 4,779,898, 4,838,648, 4,930,866, 5,059,245, 5,135,812, 5,171,363, and 5,214,530, the disclosures of which are incorporated herein by reference in their entirety.

Optically-variable thin-film pigment flakes are prepared by depositing onto a flexible web combinations of transparent dielectric layers, semi-opaque metal layers, and metal reflecting layers to form a multilayer thin film interference structure. The interference structure typically has at least one metal reflecting layer and at least one transparent dielectric layer. Various combinations of these layers can be utilized to achieve the desired optically variable effect. The interference structure produces a dichroic optical effect, which is typically provided by a dielectric stack with layers of varying refractive indexes or by combinations of transparent dielectric layer(s) and semi-opaque metal layer(s). In a preferred embodiment, the interference structure has in order, on one side of the metal reflecting layer, at least one transparent dielectric layer and at least one semi-opaque metal layer. In a particularly preferred embodiment, this layer structure is symmetrical on both sides of the metal reflecting layer.

Aluminum is often used as the metal reflecting layer for a variety of reasons such as its cost and commercial availability, although other materials, such as gold, copper, or silver can also be used. The semi-opaque metal layer can be formed from metals such as chromium, nickel, or Inconel. The transparent dielectric layers can be formed from materials such as silicon dioxide, magnesium fluoride, or aluminum oxide. Layer thicknesses can be varied according to the particular desired characteristics of the pigment. For example, U.S. 5,135,812 describes useful thicknesses being on the order of 80 nm for the metal reflecting layer, 5 nm for the semi-opaque metal layers, and thicknesses of a plurality of halfwaves of the particular design wavelength for the transparent dielectric layers.

As mentioned above, the optically-variable thin-film pigment flakes are prepared by coating the semi-opaque metal layers, transparent dielectric layers, and metal reflecting layer onto a flexible web, and separating the web from the multilayer structure to form the pigment flakes. The web is typically a polymer material, such as polyvinyl alcohol or polyethyleneterephthalate. The separation can be accomplished by stripping the multilayer structure from the web, in which case a stripping layer, as is known in the art, is preferably deposited onto the web prior to the other layers. Heat and/or solvent may be used to facilitate the stripping process. Alternatively, the web may be dissolved in a suitable solvent (aqueous or organic, depending on the solubility of the web material) to accomplish the separation. The coated web may optionally be cut or shredded to more easily fit into a container prior to the dissolution step.

As the multilayer structure is separated from the web, it typically breaks into flakes of irregular shapes and sizes. These flakes will usually require further processing to achieve the size requirements of the present invention. This can be accomplished by techniques known in the art, such as ultrasonic agitation, milling, or grinding. It may be preferred to use various combinations of solvents, surfactants, and/or resins during the size reduction process, as is known in the art.

In a preferred embodiment, the above-described techniques are used to achieve the desired average particle size of 5 to 40 µm and the desired particle size distribution where no more than 10% of the particles have a particle size of greater than 50 µm and substantially none of the particles have a particle size of greater than 125 µm, as described in the U.S. patent application entitled "Coating Composition Containing Optically-Variable Pigment", filed on even date herewith in the names of Kendall Scott and Daniel W. Johnson. It may, however, be necessary to use microscopic filtering techniques, as is known in the art, to assure that the desired particle size distribution is achieved.

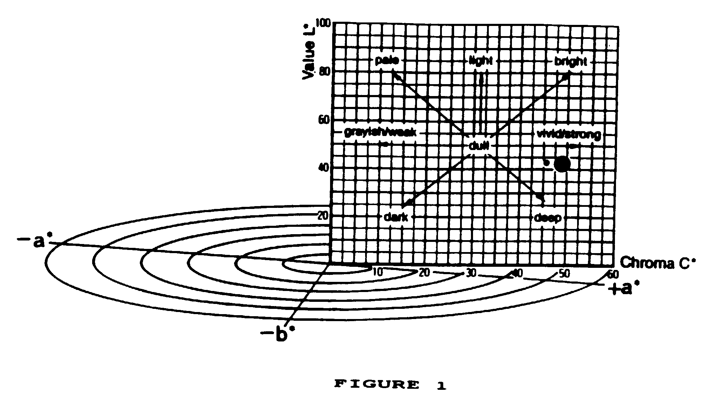

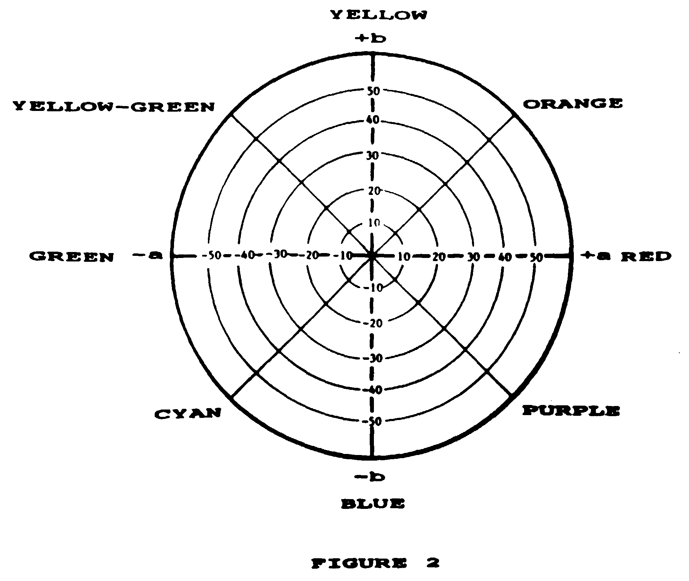

The interference mica used in the present invention provides an interference color that is similar to one of the dichroic solors of the optically-variable thin-film dichroic pigment. Colors may be conceptualized by reference to Figures 1 and 2. Referring to Figure 1, there is shown a simplified section through the CIE 1976 (L*, a*, b*) color space diagram based on the color measurement system introduced by Richard S. Hunter, "Photoelectric Tristimulus Colorimetry with Three Filters," National Bureau of Standards Circular 429, United States Government Printing Office, 1942, reprinted in J. Opt. Soc. Am., 32, 509-538 (1942) which is incorporated herein by reference. A particular color can be completely described by defining its value (lightness), hue (color), and chroma (degree of color saturation). In this system the value of a color, L*, corresponds to its lightness and ranges from zero (black) to one hundred (white). The hue of a color is designated by values of a* and b*, with a* corresponding to redness (if a* is positive) or greenness (if a* is negative), and yellowness (if b* is positive) or blueness (if b* is negative). The chroma of the color is designated C* and is equal to the square root of the sum of the squares of a* and b*.

In Figure 1, the value (L*) of a color is measured on the vertical axis, while a* and b* are measured as points on a rectangular coordinate system in the plane horizontal to the L* axis. Chroma (C*) is measured by the perpendicular distance from the L* axis to the point fixed by a* and b*. For example, in Figure 1, the color represented by point A is shown having a value of L*=44, and a hue represented by a*=45 and b*=10. The chroma, or degree of saturation of this color is thus (45² + 10²)^{0.5} = 46.10.

As can be seen further from Figure 1, the common descriptions of colors can be derived from the value and chroma of a color. For example, colors of a particular hue can be "bright" (high value and chroma), "vivid" (high chroma, medium value), "deep" (low value and high chroma), "dark" (low value and chroma), "weak" (low chroma, medium value), "pale" (high value and low chroma), or "light" (high value, moderate chroma). Colors of intermediate value tend toward grayishness or weakness as their chroma decreases.

Referring to Figure 2, a horizontal section through the CIE 1976 (L*, a*, b*) color space diagram at constant L* is shown. The common names of the colors are shown around the periphery of the graph.

In accordance with the present invention, the color of the interference mica is similar one of the dichroic colors of the optically-variable thin-film dichroic pigment. Such similar colors preferably fall within the the same quadrant of the Figure 2 color wheel.

The perception of color is very subjective, and what one observer would call "red" another might call "orange-red." However, as used throughout this specification and appended claims, the color names are defined as follows: red is any transmitted or reflected color of a wavelength of between about 610 and about 700 nanometers; orange is any transmitted or reflected color of between about 590 and about 610 nanometers; yellow is any transmitted or reflected color of between about 570 and about 590 naometers; green is any transmitted or reflected color between about 500 and about 570 nanometers; blue is any transmitted or reflected color of between about 460 and about 500 nanometers; and violet or purple is any transmitted color of between about 400 and about 460 nanometers.

The interference micas useful in the present invention are colored, transparent, metal oxide encapsulated mica particles of the types available commercially from such suppliers as EM Chemicals, 5 Skyline Drive, Hawthorne, NY 10532 and the Mearl Corp., 1057 Lower South Street, Peekskill, NY 10566. The mica particles are encapsulated in a thin, transparent metal oxide coating of such materials as titanium dioxide or iron oxide, and are available in a rich variety of colors. In a preferred embodiment, the interference mica is a red interference mica such as Afflair® 9215 Rutile Red Pearl (from E & M). In another preferred embodiment, the interference mica is a blue interference mica such as Afflair® 9215 Rutile Blue Pearl (from E & M).

The interference mica particles are preferably carefully screened and controlled so that all particles are within about 5 microns to about 60 microns (preferably about 5 microns to about 45 microns, and typically about 5 microns to about 35 microns) in their largest dimension and about 0.25 micron to about one micron in thickness. The closely controlled particle size provides the transparent, colored, translucent, reflective and refractive features necessary for these pigments.

For additional exterior durability (e.g. exposure to the sun) the mica particles may be coated with minor amounts of other additives (e.g. additional layers) such as high temperature stable metal oxides such as antimony, tin, copper, calcium, cadmium, chromium, cobalt, barium, strontium, manganese, magnesium, nickel and lithium can also be used on the encapsulated mica. The oxide encapsulation layer is generally in the molecular range of thicknesses representing about 10% to about 85% by weight of the total weight of the encapsulated mica particle, preferably about 20% to about 60% and typically about 29% to about 48% by weight.

Interference micas of uniform shape (platelet) and smoothness are preferred, as they reduce the problem of color drift due to the shear forces (yielding fragmentation problems) in the handling (overhead pumping facilities) and application problems of ghosting, mottling, silkiness and repair color matching.

According to the invention, the combination of optically-variable thin-film pigment and the interference mica pigment is used in a coating composition along with a binder resin. Useful pigment:binder ratios range from 0.10:1 to 0.40:1, and preferably 0.20:1 to 0.30:1. The binder used in the present invention may be selected from of any of a number of polymers known in the art. Polymers known in the art to be useful in coating compositions include acrylics, vinyls, polyurethanes, polycarbonates, polyesters, alkyds, epoxy resins, and polysiloxanes. Preferred polymers include acrylics and polyurethanes. The resin may be of the thermoplastic type, but are preferably crosslinkable, and thus comprise one or more type of cross-linkable functional groups. Such groups include, for example, hydroxy, isocyanate, amine, epoxy, acrylate, vinyl, silane, and acetoacetate groups. These groups may be masked or blocked in such a way so that they are unblocked and available for the cross-linking reaction under the desired curing conditions, generally elevated temperatures (i.e., thermoset). Useful cross-linkable functional groups include hydroxy, epoxy, acid, anhydride, silane, and acetoacetate groups. Preferred cross-linkable functional groups include hydroxy functional groups and amino functional groups.

The above-described polymers may be self-crosslinkable, or the coating composition may include a separate cross-linking agent that is reactive with the functional groups of the polymer. When the polymer comprises hydroxy functional groups, for example, the cross-linking agent may be an aminoplast resin, isocyanate and blocked isocyanates (including isocyanurates), and acid or anhydride functional cross-linking agents.

The coating composition of the present invention may be solvent-borne or water-borne. Suitable binder resins for water-borne coating compositions are water-dispersible or water-soluble ionic or nonionic resins. Anionic or nonionic resins are preferred for use in topcoat applications. Examples of water-dispersible polymers used for topcoats are contained in US Patent Nos. 4,794,147; 4,791,168; and 4,518,724, all of which are incorporated herein by reference. Such systems may also include a crosslinker, as described above. Polymeric-type melamine crosslinkers are often preferred for water-borne coating compositions where the binder resin is anionically stabilized, as such polymeric-type melamines do not require strong acid catalysis. When the film-forming resin is nonionically stabilized, a polymeric melamine may be used or a monomeric melamine may be used in conjunction with a strong acid catalyst like a sulfonic acid or blocked sulfonic acid.

A solvent may optionally be utilized in the coating composition of the present invention. Although the composition of the present invention may be utilized, for example, in the form of substantially solid powder, or a dispersion, it is usually preferred that the composition is in a substantially liquid state, which can be accomplished with the use of a solvent. This solvent should act as a solvent with respect to both the binder resin as well as any crosslinking agents used. In general, as is well-known in the art, depending on the solubility characteristics of the components in the coating composition, the solvent can be any of a number of organic solvent(s) and/or water. In one preferred embodiment, the solvent is a polar organic solvent. More preferably, the solvent is a polar aliphatic solvents or polar aromatic solvents, such as a ketone, ester, acetate, aprotic amide, aprotic sulfoxide, or aprotic amine. Examples of useful solvents include methyl ethyl ketone, methyl isobutyl ketone, m-amyl acetate, ethylene glycol butyl ether-acetate, propylene glycol monomethyl ether acetate, xylene, n-methylpyrrolidone, or blends of aromatic hydrocarbons.

In another preferred embodiment, the solvent is water or a mixture of water with small amounts of aqueous co-solvents. Preferred co-solvents include acetates such as butyl acetate, hexyl acetate, and octyl acetate; glycol ethers and glycol ether acetates, such as propylene glycol ether and propylene glycol monomethyl ether acetate; and ketones, such as methyl propyl ketone, methyl isobutyl ketone, and methyl hexyl ketone. Glycol ethers and glycol ether acetates are especially preferred.

For most liquid coating compositions, the solvent may be present in an amount of from about 0.01 weight percent to about 99 weight percent, preferably from about 10 weight percent to about 60 weight percent, and more preferably from about 30 weight percent to about 50 weight percent.

It may be desirable to include small amount of rheology control agents, for example fumed silicas, hectorite clays, bentonite clays, or cellulosics like cellulose acetate butyrate. Such materials are usually used at levels of less than 10% based on the total solid weight of reactants. Rheology control agents are used to control the flow and levelling of the composition during application and curing steps. The rheology control agent is also useful for controlling the metallic appearance of the coating. Such materials may help "fix" the pigment flake surface in an alignment parallel to the surface of the coating to maximize the brightness when viewed head-on and to maximize the darkness when viewed obliquely.

The coating composition of the invention may further comprise additional pigment(s). In one preferred embodiment, the coating composition of the invention further comprises a black pigment, as described in the U.S. patent application entitled "Coating Composition Containing Optically-Variable Pigment and Black Pigment", filed on even date herewith in the name of Daniel W. Johnson. This helps to compensate for the poor hiding power of the micas, allowing them to make up a greater proportion of the total pigment in the composition. The black pigment preferably comprises less than 5% by weight of the total pigment in the composition to avoid any substantial darkening of the coating. The useful and preferred upper limits of mica (as weight percent of the total pigment in the composition) for mica and black pigment levels are set forth in the following table.

| Wt. % Black Pigment | Useful Mica Levels | Preferred Mica Levels |
|---|---|---|
| 0 | 40 | 15 |
| 1 | 45 | 20 |
| 3 | 50 | 35 |
| 5 | 55 | 40 |

In another preferred embodiment, the coating composition further comprises a metallic pigment, as described in the U.S. patent application entitled "Coating Composition Containing Optically-Variable Dichroic Pigment and Metallic Pigment", filed on even date herewith in the name of Daniel W. Johnson. The coating composition may also contain a transparent pigment to operate in a subtractive mode to modify the colors or block unwanted colors of the optically-variable thin-film pigment. For example, in the case of a gold-to-green shifting pigment, the addition of yellow dyes or transparent yellow pigments blocks the blue reflective light at large viewing angles by absorbing the undesired colors. Combinations of any of the above-described supplementary pigments with each other or with other known pigments may also be made.

The coating compositions according to the invention can contain optional ingredients such as wetting agents, surfactants, defoamers, antioxidants, UV absorbers, light stabilizers, plasticizers, and so forth. Examples of surfactants and wetting agents include alkyl imidazolines such as those available from Ciba-Geigy Industrial Chemicals as Amine C®, acetylenic alcohols available from Air Products and Chemicals as Surfynol® 104. These optional ingredients, when present, constitute from about 0 to 20 percent by weight of resin solids.

The prepared coating composition is applied to a substrate by any of a number of conventional means, for example by spraying, brushing, dipping or flowing. The preferred methods of application are by spraying or electrostatic spraying. These methods are widely used, especially in the application of automotive coatings. For example, the coating may be applied using a Model 62 syphon spray gun (available from Binks Manufacturing Corp., Franklin Park, Ill.) with 50-80 psi atomizing air pressure.

The substrate to which the coating composition of this invention is to be applied may be, for example, metal, ceramic, plastic, glass, paper, or wood. The substrate may also be any of the aforementioned materials precoated with this or another coating composition. The coating compositions of this invention have been found to be particularly useful over precoated steel or plastic substrates in automotive applications. They are particularly suited to use over primed automotive substrates as topcoat formulations or basecoat formulations that are overcoated with clearcoat formulations.

After application of the coating composition to the substrate, the coating is cured, preferably by heating at a temperature and for a length of time sufficient to cause the conversion of all or nearly all of the reactive groups. The cure temperature is usually from 115°C to 180°C, and the length of cure is usually 15 minutes to 60 minutes. Preferably, the coating is cured at 120-150°C for 20 to 30 minutes. The thickness of the cured coating can be from 1 to 150 microns, but when used as an automotive topcoat or basecoat the coating thickness is generally from 10 to 70 microns.

In a particularly preferred embodiment, the composition of the invention is used as the pigmented basecoat of a composite color-plus-clear coating. Such composite coatings are popular for their depth of color and liquid glossy surface appearance. They have found particularly wide acceptance in the field of automotive coatings. The basecoat may be cured before the clearcoat is applied or the basecoat may be given a wet-on-wet application of a clearcoat. By the term "wet-on-wet" it is meant that after application the basecoat is allowed to flash, or dry, to remove most of the water and other solvent that it contained, but it is not cured before the clearcoat composition is applied. After the clearcoat composition is applied, it is allowed to flash or dry for a period of time, then the basecoat and the clearcoat are cured together.

The clearcoat may be a coating composition according to this invention or another composition known to the art to have utility as a clearcoat. The clearcoat does not necessarily need to use the cure mechanism used by the basecoat, although the cure mechanisms used must not interfere with one another.

The basecoat may be applied in one or two layers, with a short period between application of layers to allow solvent and water to evaporate (termed a "flash" period). After application, the basecoat may be further dried, preferably at a slightly elevated temperature, as in a 120°F oven, for a period of 5 to 20 minutes before the clear coat composition is applied. The clearcoat composition is preferably applied by spraying, in one layer, or preferably two layers with a short flash between layers. The clearcoat composition is allowed to flash under ambient or heated conditions for 1-20 minutes. The uncured coatings are then cured, usually by thermoset methods as described hereinabove. The resulting appearance and physical properties are excellent.

The invention is further described by the following examples.

### Example 1

A coating composition was prepared having the following formulation:

| Resin Vehicle Containing: | |
|---|---|
| 17.47% | acrylic microgel |
| 33.00% | melamine resin crosslinker |
| 49.53% | OH-functional acrylic resin binder |
| | (50.06 parts by weight total vehicle solids per 100 parts by weight paint) |

| Pigment Containing: | |
|---|---|
| 60% | optically-variable thin-film pigment flakes |
| 40 | EM 9225 blue mica (from E & M) (14.58 parts by weight total pigment per 100 parts by weight paint) |

| Additives: | |
|---|---|
| polybutyl acrylate | 0.20 parts/100 parts paint |
| Fumed silica | 0.50% (based on vehicle solids) |
| Tinuvin® 1130 | 0.50% (based on vehicle solids) |
| Nacure® 5225 | 0.50% (based on vehicle solids) |
| methanol | 3.0 parts/100 parts paint |

The coating compositions were reduced to 17" #4

Ford Cup with n-butyl acetate, and sprayed onto a primed metal panel, flash dried, and overcoated with a clearcoat containing an OH-functional acrylic resin and a melamine resin crosslinker. The coatings were then baked for 30 minutes at 121°C to cure to a hard durable coating having a basecoat thickness of 15-20 µm and a clearcoat thickness of 41-46 µm. For comparison, an identical panel was prepared, except that the pigment was composed of 100% of the optically-variable thin-film pigment. The panel prepared according to the invention maintained the dichroic effect observed in the comparison panel, but provided a cleaner color with lower chromaticity in the blue region. The invention has been described in detail with reference to particular embodiments thereof. It is understood that modifications and variations may be made.

## Claims

1. A coating composition comprising a polymer resin binder and optically variable thin film dichroic pigment flakes, said pigment flakes having a multilayer thin film interference structure comprising a metal reflector layer having first and second parallel planar surfaces, and, disposed on at least one of said first and second planar surfaces, at least one transparent dielectric layer, said coating composition further comprising an interference mica pigment having an interference color that is similar to one of the dichroic colors of the optically variable thin film pigment.

2. A coating composition according to claim 1 wherein the multilayer thin film interference structure comprises, disposed on both of said first and second planar surfaces, at least one transparent dielectric layer.

3. A coating composition according to claim 1 wherein the multilayer thin film interference structure further comprises, disposed on at least one of said first and second planar surfaces, at least one semi-opaque metal layer.

4. A coating composition according to claim 2 wherein the multilayer thin film interference structure further comprises, disposed on both of said first and second planar surfaces, at least one semi-opaque metal layer.

5. A coating composition according to claim 4 wherein the layer configuration on each side of said first and second planar surfaces are symmetrical with each other.

6. A coating composition according to claim 4 wherein the multilayer thin film interference structure comprises at least one transparent dielectric layer having an index of refraction of 1.65 or less.

7. A coating composition according to claim 1 wherein the multilayer thin film interference structure comprises at least one transparent dielectric layer having an index of refraction of 1.65 or less.

8. A coating composition according to claim 1 wherein the optically variable thin film pigment flakes are prepared by coating the layers of the multilayer thin film interference structure onto a flexible web, separating the web from the multilayer coating so as to produce flakes of the multilayer thin film interference structure, and processing the flakes if necessary to provide said average particle size and particle size distribution.

9. A coating composition according to claim 1 wherein said interference mica is a metal oxide-encapsulated mica particle.

10. A coating composition according to claim 9 wherein said metal oxide is iron oxide.

11. A coating composition according to claim 9 wherein said metal oxide is titanium dioxide.

12. A coating composition according to claim 1 wherein said combination of optically-variable pigment and said interference mica, and said binder are present in a pigment:binder ratio of from 0.10:1 to 0.40:1.

13. A coating composition according to claim 1 wherein said interference mica comprises 1 to 40% of the total weight of the pigment in the composition.

14. A coating composition according to claim 1 wherein said interference mica comprises 1 to 15% of the total weight of the pigment in the composition.

15. A coating composition according to claim 1, further comprising a black pigment.

16. A coating composition according to claim 15 wherein the black pigment is 5% or less of the total weight of pigment in the composition.

17. A coating composition according to claim 16 wherein said interference mica comprises 1 to 55% of the total weight of the pigment in the composition.

18. A coating composition according to claim 1 wherein said interference mica comprises 1 to 40% of the total weight of the pigment in the composition.

19. A coating comprising a substrate having thereon a layer of the coating composition according to claim 1.

20. A coating according to claim 19 wherein said layer of the coating composition is the colored layer of a color-plus-clear composite coating.

21. A coating according to claim 19 wherein the substrate is an automotive body panel.

## Patentansprüche

1. Beschichtungszusammensetzung, enthaltend ein polymeres Harz als Bindemittel und optisch variable dünne dichroitische Pigmentplättchen mit einer mehrschichtigen Dünnschichtinterferenzstruktur aus einer Metallreflektorschicht mit einer ersten und einer zweiten parallelen planaren Oberfläche und mindestens einer auf mindestens einer der ersten und zweiten planaren Oberflächen abgeschiedenen transparenten dielektrischen Schicht, wobei die Beschichtungszusammensetzung außerdem auch noch ein Glimmer-Interferenzpigment mit einer einer der dichroitischen Farben des optisch variablen Dünnschicht-Pigments ähnlichen Interferenzfarbe enthält.

2. Beschichtungszusammensetzung nach Anspruch 1, wobei die mehrschichtige Dünnschichtinterferenzstruktur mindestens eine sowohl auf der ersten als auch auf der zweiten planaren Oberfläche abgeschiedene transparente dielektrische Schicht aufweist.

3. Beschichtungszusammensetzung nach Anspruch 1, wobei die mehrschichtige Dünnschichtinterferenzstruktur außerdem auch noch mindestens eine auf mindestens einer der ersten und zweiten planaren Oberflächen abgeschiedene semiopake Metallschicht aufweist.

4. Beschichtungszusammensetzung nach Anspruch 2, wobei die mehrschichtige Dünnschichtinterferenzstruktur außerdem auch noch mindestens eine sowohl auf der ersten als auch auf der zweiten planaren Oberfläche abgeschiedene semiopake Metallschicht aufweist.

5. Beschichtungszusammensetzung nach Anspruch 4, wobei der Schichtenaufbau auf jeder Seite der ersten und der zweiten planaren Oberfläche symmetrisch ist.

6. Beschichtungszusammensetzung nach Anspruch 4, wobei die mehrschichtige Dünnschichtinterferenzstruktur mindestens eine transparente dielektrische Schicht mit einem Brechungsindex von höchstens 1,65 aufweist.

7. Beschichtungszusammensetzung nach Anspruch 1, wobei die mehrschichtige Dünnschichtinterferenzstruktur mindestens eine transparente dielektrische Schicht mit einem Brechungsindex von höchstens 1,65 aufweist.

8. Beschichtungszusammensetzung nach Anspruch 1, wobei die optisch variablen dünnen Pigmentplättchen herstellt werden, indem man die Schichten der mehrschichtigen Dünnschichtinterferenzstruktur auf eine flexible Bahn aufbringt, die Bahn zur Herstellung von Plättchen der mehrschichtigen Dünnschichtinterferenzstruktur von dem mehrschichtigen Überzug abtrennt und die Plättchen gegebenenfalls auf die durchschnittliche Teilchengröße und Teilchengrößenverteilung verarbeitet.

9. Beschichtungszusammensetzung nach Anspruch 1, wobei es sich bei dem Interferenzglimmer um ein von Metalloxid eingehülltes Glimmerteilchen handelt.

10. Beschichtungszusammensetzung nach Anspruch 9, wobei es sich bei dem Metalloxid um Eisenoxid handelt.

11. Beschichtungszusammensetzung nach Anspruch 9, wobei es sich bei dem Metalloxid um Titandioxid handelt.

12. Beschichtungszusammensetzung nach Anspruch 1, wobei die Kombination aus optisch variablem Pigment und dem Interferenzglimmer und das Bindemittel in einem Pigment-Bindemittel-Verhältnis von 0,10:1 bis 0,40:1 vorliegen.

13. Beschichtungszusammensetzung nach Anspruch 1, wobei der Interferenzglimmer 1 bis 40% des Gesamtgewichts an Pigment in der Zusammensetzung ausmacht.

14. Beschichtungszusammensetzung nach Anspruch 1, wobei der Interferenzglimmer 1 bis 15% des Gesamtgewichts an Pigment in der Zusammensetzung ausmacht.

15. Beschichtungszusammensetzung nach Anspruch 1, die außerdem auch noch ein Schwarzpigment enthält.

16. Beschichtungszusammensetzung nach Anspruch 15, wobei das Schwarzpigment höchstens 5% des Gesamtgewichts an Pigment in der Zusammensetzung ausmacht.

17. Beschichtungszusammensetzung nach Anspruch 16, wobei der Interferenzglimmer 1 bis 55% des Gesamtgewichts an Pigment in der Zusammensetzung ausmacht.

18. Beschichtungszusammensetzung nach Anspruch 1, wobei der Interferenzglimmer 1 bis 40% des Gesamtgewichts an Pigment in der Zusammensetzung ausmacht.

19. Überzug aus einem Substrat mit einer Schicht aus der Beschichtungszusammensetzung gemäß Anspruch 1.

20. Überzug nach Anspruch 19, wobei es sich bei der Schicht aus der Beschichtungszusammensetzung um die Farbschicht einer Farblack-Klarlack-Verbundbeschichtung handelt.

21. Überzug nach Anspruch 19, wobei es sich bei dem Substrat um ein Autokarosserieblech handelt.

## Revendications

1. Composition de revêtement comprenant un liant à résine polymère et des paillettes de pigment dichroïque en film mince et optiquement variable, lesdites paillettes de pigment ayant une structure interférentielle multicouche en film mince comprenant une couche réflectrice métallique ayant une première et une deuxième surfaces planes parallèles, et, disposée sur au moins une desdites première et deuxième surfaces planes, au moins une couche diélectrique transparente, ladite composition de revêtement comprenant en outre un pigment de mica interférentiel ayant une couleur interférentielle qui est similaire à l'une des couleurs dichroïques du pigment en film mince et optiquement variable.

2. Composition de revêtement selon la revendication 1, dans laquelle la structure interférentielle multicouche en film mince comprend, disposée sur à la fois ladite première et ladite deuxième surfaces planes, au moins une couche diélectrique transparente.

3. Composition de revêtement selon la revendication 1, dans laquelle la structure interférentielle multicouche en film mince comprend en outre, disposée sur au moins une desdites première et deuxième surfaces planes, au moins une couche métallique semi-opaque.

4. Composition de revêtement selon la revendication 2, dans laquelle la structure interférentielle multicouche en film mince comprend en outre, disposée sur à la fois ladite première et ladite deuxième surfaces planes, au moins une couche métallique semi-opaque.

5. Composition de revêtement selon la revendication 4, dans laquelle les configurations en couche sur chaque face desdites première et deuxième surfaces planes sont symétriques l'une par rapport à l'autre.

6. Composition de revêtement selon la revendication 4, dans laquelle la structure interférentielle multicouche en film mince comprend au moins une couche diélectrique transparente ayant un indice de réfraction de 1,65 ou moins.

7. Composition de revêtement selon la revendication 1, dans laquelle la structure interférentielle multicouche en film mince comprend au moins une couche diélectrique transparente ayant un indice de réfraction de 1,65 ou moins.

8. Composition de revêtement selon la revendication 1, dans laquelle les paillettes de pigment en film mince et optiquement variable sont préparées en appliquant les couches de la structure interférentielle multicouche en film mince sur une bande flexible, en séparant la bande du revêtement multicouche de manière à produire des paillettes de la structure interférentielle multicouche en film mince et en traitant, le cas échéant, les paillettes pour fournir lesdites taille de particule moyenne et répartition de taille de particule.

9. Composition de revêtement selon la revendication 1, dans laquelle ledit mica interférentiel est une particule de mica encapsulée à l'oxyde métallique.

10. Composition de revêtement selon la revendication 9, dans laquelle ledit oxyde métallique est l'oxyde de fer.

11. Composition de revêtement selon la revendication 9, dans laquelle ledit oxyde métallique est ledit oxyde de titane.

12. Composition de revêtement selon la revendication 1, dans laquelle ladite combinaison de pigment optiquement variable et dudit mica interférentiel, et ledit liant sont présents en un rapport pigment:liant de 0,10:1 à 0,40:1.

13. Composition de revêtement selon la revendication 1, dans laquelle ledit mica interférentiel comprend de 1 à 40% du poids total du pigment dans la composition.

14. Composition de revêtement selon la revendication 1, dans laquelle ledit mica interférentiel comprend de 1 à 15% du poids total du pigment dans la composition.

15. Composition de revêtement selon la revendication 1, comprenant en outre un pigment noir.

16. Composition de revêtement selon la revendication 15, dans laquelle le pigment noir constitue 5% ou moins du poids total de pigment dans la composition.

17. Composition de revêtement selon la revendication 16, dans laquelle ledit mica interférentiel comprend de 1 à 55% du poids total du pigment dans la composition.

18. Composition de revêtement selon la revendication 1, dans laquelle ledit mica interférentiel comprend de 1 à 40% du poids total du pigment dans la composition.

19. Revêtement comprenant un substrat ayant pardessus une couche de la composition de revêtement selon la revendication 1.

20. Revêtement selon la revendication 19, dans lequel ladite couche de la composition de revêtement est la couche colorée d'un revêtement composite couleur-plus-transparence.

21. Revêtement selon la revendication 19, dans lequel le substrat est un panneau de carosserie automobile.
